# EUROPÄISCHE PATENTANMELDUNG

(11) **EP 1 217 332 A2**
(43) Veröffentlichungstag der Anmeldung: **26.06.2002**
(21) Anmeldenummer: 01121552.2
(22) Anmeldetag: 10.09.2001
(51) Int. Cl.: G01D 5/14

(54) **Kraftfahrzeugsensorvorrichtung**

(30) Priorität: 14.09.2000 DE 10045874
(71) Anmelder: Continental Teves AG & Co. oHG, 60488 Frankfurt (DE)
(72) Erfinder: Drott, Peter, 65936 Frankfurt/Main (DE); Feigel, Hans-Jörg, Dr., 61191 Rosbach (DE)

(57) **Zusammenfassung**

Die Erfindung betrifft eine Kraftfahrzeugsensorvorrichtung (1) zur Erfassung der Relativbewegung von relativ zueinander bewegbaren Teilen (3, 6) mit wenigstens einem Magneten (2), einem magnetisch leitfähigen Joch (3), welches magnetisch mit dem Magneten (2) verbunden ist, wenigstens einem magnetfeldabhängigen Sensorelement (4, 19, 20) und einem magnetisch leitfähigen Encoder (6), welcher einen magnetischen Fluß (M) durch das Sensorelement (4, 19, 20) in Abhängigkeit von der Position des Encoders (6) relativ zum Joch (3) verändert. Erfindungsgemäß ist zwischen dem Encoder (6) und dem Joch (3) ein magnetisch nicht leitfähiges Führungsteil (9) für den Encoder (6) vorgesehen.

## Beschreibung

Die vorliegende Erfindung betrifft eine Kraftfahrzeugsensorvorrichtung gemäß dem Oberbegriff des Patentanspruchs 1. Aus der gattungsgemäßen Druckschrift DE 16 73 938 OS ist eine derartige Sensorvorrichtung bekant, mittels derer beispielsweise der Druck in einem Saugrohr einer. Brennkraftmaschine, die Stellung einer Drosselklappe oder die Lageänderung einer Radachse eines Kraftfahrzeuges gemessen werden kann. Die Sensorvorrichtung weist dazu einen Magneten, ein mehrteiliges, magnetisch leitfähiges Joch, das mit dem Magneten verbunden ist, und ein magnetfeldabhängiges Sensorelement auf. Über einen magnetisch leitfähigen Encoder wird der magnetische Fluß durch das Sensorelement in Abhängigkeit von der Position des Encoders relativ zum Joch verändert und so beispielsweise eine Relativbewegung zwischen zwei Bauteilen gemessen.

Nachteilig an dieser Vorrichtung ist die hohe Meßungenauigkeit, die heutigen Anforderungen an Sensorvorrichtungen in Kraftfahrzeugen nicht mehr genügt. Der Encoder ist nämlich beim obigen Stand der Technik an einer Führungsstange befestigt, die an einer vom Joch entfernten Stelle in einem Lager geführt ist. Dadurch kann es am Ort der Beeinflussung des magnetischen Flusses durch den Encoder zu einem Verkanten bzw. zu einer unerwünschten Auslenkung radial zur Bewegungsrichtung des Encoders kommen, die wiederum das Meßergebnis und damit von diesem Meßergebnis abhängige Steuerungen oder Regelungen negativ beeinflußt.

Es ist deshalb die Aufgabe der vorliegenden Erfindung, die Meßgenauigkeit einer derartigen Sensorvorrichtung zu verbessern. Gleichzeitig soll die Kraftfahrzeugsensorvorrichtung kleinbauend und vorzugsweise auch kostengünstig herzustellen sein.

Diese Aufgabe wird erfindungsgemäß dadurch gelöst, daß bei einer gattungsgemäßen Kraftfahrzeugsensorvorrichtung zusätzlich zwischen dem Encoder und dem Joch ein magnetisch nicht leitfähiges Führungsteil für den Encoder vorgesehen ist. Hierdurch wird zum einen eine exakte Führung an der Stelle erreicht, wo der magnetisch leitfähige Encoder den magnetischen Fluß durch das Joch und damit durch das Sensorelement beeinflußt. Außerdem kann die für die Messung erforderliche Länge des Encoders dabei mit Vorteil ganz oder auch nur zum Teil für dessen Führung und somit zur Verbesserung der Meßgenauigkeit genutzt werden. Dies führt wiederum zu einer besseren Steuerung bzw. Regelung der von diesen Meßwerten abhängigen Größen.

Neben der Führung des magnetisch leitfähigen Encoders ist es erfindungsgemäß ein wesentlicher Vorteil, daß das Führungsteil magnetisch nicht leitfähig ist. Somit wird der magnetische Fluß durch das Joch bzw. das Sensorelement vom Führungsteil nicht beeinflußt, sondern lediglich vom Encoder. Dies erlaubt eine vom Führungsteil unabhängige Ausgestaltungen des magnetisch leitfähigen Encoders, insbesondere spezielle, den magnetischen Fluß durch das Sensorelement beeinflussende Konturen. Das Führungsteil kann dabei aus einem beliebigen magnetisch nicht leitfähigen Material hergestellt sein, beispielsweise aus Kunststoff oder Aluminium.

Die vorliegende Erfindung betriff ausschließlich Kraftfahrzeugsensorvorrichtungen, wobei eine Vielzahl von Anwendungen in Kraftfahrzeugen in Frage kommt. Und zwar überall dort, wo eine Relativbewegung zweier relativ zueinander bewegbarer Teile gemessen wird. Die Bewegung kann dabei eine Drehbewegung sein, vorzugsweise betrifft die Erfindung aber Linearbewegungungen. Beispielsweise eignet sich die Sensorvorrichtung gemäß der vorliegenden Erfindung inbesondere als Wegsensor für Bremsdruckgeber einer hydraulischen Bremsanlage. Aber auch ein Einsatz bei anderen fluidischen Antrieben oder Betätigungen in Kraftfahrzeugen ist denkbar. Ferner kann die Erfindung ebenso bei Stoßdämpfern oder Lenkungen eines Kraftfahrzeuges verwendet werden.

Gemäß einer besonders bevorzugten Ausführungsform der vorliegenden Erfindung ist der magnetisch leitfähige Encoder zumindest teilweise vom Joch umgriffen. Dadurch ist eine besonders kompakte, kurzbauende und genau messende Sensorvorrichtung möglich.

In einer möglichen Weiterbildung der Erfindung ist das Führungsteil mit dem Sensorgehäuse verbunden und der magnetisch leitfähige Encoder im Führungsteil und damit innerhalb des Sensorgehäuses bewegbar angeordnet. Diese Form eignet sich besonders für Wegsensoren in einem Stoßdämpfer, beispielsweise bei aktiven Stoßdämpfern, oder bei anderen Fahrwerksregelungen. Vorzugsweise kann dabei das Führungsteil einstückig mit dem Gehäuse des Sensors ausgebildet sein, was wiederum Bauraum spart und eine besonders gute Führung relativ zum Sensorgehäuse ermöglicht.

In der bevorzugten Ausführungsform der vorliegenden Erfindung ist jedoch das Führungsteil lösbar oder unlösbar mit dem Encoder verbunden und zusammen mit diesem bewegbar. Hierbei ist es von Vorteil, wenn das Führungsteil und damit auch der Encoder in Gehäuse des Sensors gelagert ist. Durch diese vorteilhafte Maßnahme kann wiederum Baulänge gespart werden, da eine anderweitige Lagerung entfallen kann.

Das Führungsteil weist bevorzugt eine Dichtfläche auf, die zusammen mit einem Dichtelement eine Dichtung bildet. Als Dichtelement kann dabei ein handelsübliches elastomeres Dichtelement vorgesehen sein, etwa eine Lippenringdichtung. Durch diese Maßnahme ist eine sehr kompakte Bauweise einer Baugruppe möglich, in die die erfindungsgemäße Sensorvorrichtung eingesetzt ist. Die für die Dichtung erforderliche Länge, beispielweise eines Kolbens eines Bremsdruckgebers, kann zugleich in vorteilhafter Weise für die Wegmessung genutzt werden. Ebenfalls Bauraum sparend wirkt es sich aus, wenn das Dichtelement dabei direkt oder indirekt am Gehäuse des Sensors abgestützt ist, weil dadurch eine anderweitige Abstützung nicht mehr erforderlich sein kann.

Gemäß einer bevorzugten Variante der vorliegenden Erfindung verläuft die Hauptbewegungsrichtung des Encoders in etwa senkrecht zu einer vom Joch aufgespannten Fläche und/oder dem magnetischen Fluß. Hierdurch haben unerwünschte Bewegungen in einer anderen als der Hauptbewegungsrichtung einen weniger starken Einfluß auf den magnetischen Fluß durch das Sensorelement.

Wenn zusätzlich noch das Gehäuse des Sensors radial zur Hauptbewegungsrichtung des Encoders bewegbar ist, können engere Luftspalte zwischen dem magnetisch leitenden Encoder und dem Joch realisiert werden. Der radiale Freiheitsgrad des Sensorgehäuses kann außerdem bei radialen Auslenkungen des Encoders in Art einer schwimmenden Lagerung genutzt werden. Dies ermöglicht eine genaue Messung der Relativbewegung auch bei größeren radialen Auslenkungen des Encoders.

Mit Vorteil kann auch das Joch derart ausgebildet sein, daß bei einer Auslenkung des Encoders radial zu seiner Hauptbewegungsrichtung der magnetische Fluß durch das Sensorelement nahezu unbeeinflußt ist. Somit kann ein Spiel des Encoders im Führungsteil zugelassen werden, ohne daß es zu einer zu großen Verfälschung des Meßsignals kommt.

Vorzugsweise sind dabei ein erster Abstand bzw. Luftspalt vom Encoder zu einem ersten Teil des Jochs und ein zweiter Abstand bzw. Luftspalt von dem Encoder zu einem zweiten Teil des Jochs jeweils groß gegenüber einer möglichen radialen Auslenkung bzw. Querauslenkung des Encoders. Dadurch kann zusätzlich zu einer Querauslenkung des Encoders in Richtung des magnetischen Flusses, bei der eine Verringerung eines Luftspaltes auf der einen Seite mit einer Vergrößerung des Luftspaltes auf der entgegengesetzten Seite des Encoders in Art einer Reihenschaltung kompensiert wird, auch eine Querauslenkung senkrecht zum magnetischen Fluß zugelassen werden.

Gemäß einer besonders bevorzugten Ausführungsform der vorliegenden Erfindung weist der Encoder eine informationstragende Kontur und/oder Oberfläche auf. Insbesondere ist dabei die Kontur bzw. Oberfläche in Hauptbewegungsrichtung des Encoders derart ausgebildet, daß ein Ausgangssignal des Sensorelementes in etwa proportional zur Relativbewegung in Hauptbewegungsrichtung ist. Der Encoder soll vorzugsweise also so gestaltet sein, daß die Sensorkennlinie, die beispielsweise eine Spannung in Anhängigkeit vom Weg beschreibt, nahezu linear verläuft. Dies führt in vorteilhafter Weise zu einer Kompensation von nichtlinearen Effekten des Sensors bei sonst kontinuierlicher Veränderung des Luftspaltes zwischen Encoder und Joch. Dies ist eine besonders kostengünstige Lösung der Linearisierung der Sensorkennlinie, die sonst nur mit einer nachgeschalteten elektronischen Kennlinienkorrektur erfolgen könnte. Mit Vorteil wird bereits eine annähernd lineare Sensorkennlinie erreicht, wenn die Kontur des Encoders nahezu konisch ausgebildet ist. Erfindungsgemäß kann die Kontur des Encoders aber auch anders gestaltet sein.

Um eine Redundanz, d.h. ein weiteres Ausgangssignal eines Sensorelementes zu erhalten, mit dessen Hilfe das Ausgangssignal des ersten Sensorelementes überprüft werden kann bzw. das das erste Sensorsignal bei dessen Ausfall ersetzt, ist vorzugsweise in der Kraftfahrzeugsensorvorrichtung ein zusätzliches Sensorelement vorgesehen. Dies ist insbesondere bei sicherheitskritischen Systemen, wie beispielsweise Bremsanlagen von Kraftfahrzeugen, von Vorteil. Bei Ausfall eines Sensorelementes bleiben die Kraftfahrzeugsensorvorrichtung und die geregelte Bremse somit funktionsfähig.

Insbesondere ist mit Vorteil in der erfindungsgemäßen Sensorvorrichtung ein weiteres Sensorelement vorgesehen, das bei einer Bewegung des Encoders ein Einschaltsignal für die Kraftfahrzeugsensorvorrichtung oder andere Bauteile liefert. Dieses weitere Sensorelement kann mit einer geringen Stromaufnahme versehen sein und dient als Weckschalter bzw. Initialsignalgeber, beispielsweise um ein von einer Spannungsversorgung abgeschaltetes System "aufzuwecken", sobald sich der magnetische Fluß durch das weitere Sensorelement ändert. Beispielsweise kann auf diese Weise auch eine elektronische Kontrolleinheit ECU (Electronic Control Unit) einer elektronisch geregelten Kraftfahrzeugbremse eingeschaltet werden.

Mit besonderem Vorteil ist das Führungsteil als Teil eines Betätigungskolbens eines hydraulischen Bremsdruckgebers ausgebildet. Durch den im Führungsteil und damit im Kolben vorgesehenen, magnetisch leitfähigen Encoder ist im Vergleich zu einer parallel dazu angeordneten, separaten Sensorvorrichtung kein zusätzlicher Bauraum erforderlich. Außerdem kann eine vormontierte Einheit aus Kolben und Encoder geschaffen werden.

Wenn gemäß einer bevorzugten'Ausbildung der vorliegenden Erfindung das Gehäuse des Sensors im Gehäuse des Bremsdruckgebers integriert ist, so erhält man ebenfalls eine einfach zu handhabende, vormontierte Baugruppe, bei der die einzelnen Bauteile des Sensors besonders gut vor Korrosion geschützt sind.

Gegenstand der vorliegenden Erfindung ist ebenfalls ein Bremsdruckgeber mit einer oben beschriebenen Kraftfahrzeugsensorvorrichtung. Der Bremsdruckgeber ist insbesondere für den Einsatz in einer elektro-hydraulischen Bremse (EHB) des Typs "brake-by-wire" geeignet, bei der der Bremswunsch eines Fahrers sensiert und auch mittels Elektronik anstatt der bisher aussschließlich üblichen Hydraulik an die Radbremsen eines Kraftfahrzeuges übertragen wird, wobei das Bremspedal über einen Gabelkopf und eine Kolbenstange mit Kugelkopf mit dem Encoder verbunden ist. Das derzeit übliche Pedalgefühl wird dabei mittels eines Simulators erzeugt.

Weitere Einzelheiten, Merkmale und Vorteile der vorliegenden Erfindung gehen aus der nachfolgenden Beschreibung eines Ausführungsbeispieles unter Bezugnahme auf die beigefügten Zeichnungen hervor. In den Zeichnungen zeigt:
- Fig. 1: einen erfindungsgemäßen Bremsdruckgeber mit Sensorvorrichtung im Längsschnitt,
- Fig. 2: eine Kraftfahrzeugsensorvorrichtung gemäß der vorliegenden Erfindung im Längsschnitt, wobei in Fig. 2 Einzelheiten aus Fig. 1 vergrößert dargestellt sind, und
- Fig. 3: eine im Vergleich zu Fig. 2 nochmals vergrößerte Ansicht der erfindungsgemäßen Sensorvorrichtung im Längs- und Querschnitt.

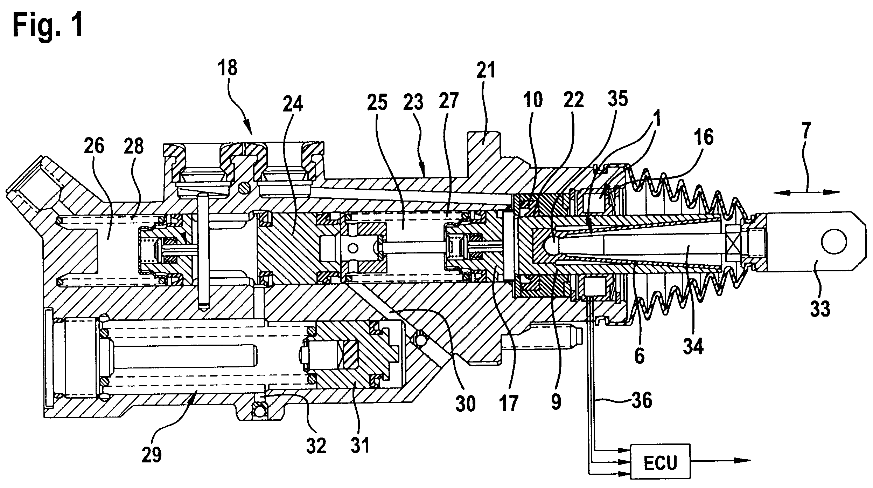

Der in Fig. 1 als Beispiel für eine bevorzugte Einsatzmöglichkeit einer erfindungsgemäßen Kraftfahrzeugsensorvorrichtung 1 dargestellte Bremsdruckgeber 18 umfaßt im wesentlichen einen mittels eines nicht gezeigten Betätigungspedals betätigbaren, vorzugsweise zweikreisigen Druckerzeuger bzw. Tandemhauptzylinder 23, der durch zwei Kolben 17, 24 begrenzte, voneinander getrennte Druckräume 25, 26 aufweist, die mit einem nicht gezeigten, drucklosen Druckmittelvorratsbehälter in Verbindung stehen. An den beiden Druckräumen (Primärdruckraum 25, Sekundärdruckraum 26) sind zugeordnete hydraulische Radbremsen (nicht gezeigt) eines Kraftfahrzeuges angeschlossen. Desweiteren sind in den Druckräumen 25, 26 eine erste sowie eine zweite Rückstellfeder 27, 28 angeordnet, die die Kolben 17, 24 entgegen deren Betätigungsrichtung vorspannen bzw. in der Ausgangsposition halten.

Weiterhin ist ein Simulator 29 vorgesehen, der beim Absperren der Druckräume 25, 26 die Pedalcharakteristik des Bremspedals bestimmt und dem Fahrer des Fahrzeuges ein gewohntes, herrkömmliches Pedalgefühl vermittelt. Um beim Absperren der Druckräume 25, 26 eine Relativbewegung des ersten Kolbens 17 gegenüber einem Gehäuse 21 des Bremsdruckgebers 18 zu ermöglichen, die unter anderem ein Zusammendrücken der ersten Rückstellfeder 27 zur Folge hat, ist zwischen dem ersten Druckraum 25 und dem Druckmittelvorratsbehälter eine hydraulische Verbindung vorgesehen, die im Falle einer Notbremsung unterbrochen bzw. abgesperrt werden kann. Die hydraulische Verbindung umfaßt eine vom ersten Druckraum 25 ausgehenden Bohrung 30 und geht vorzugsweise über einen Simulatorkolben 31 in einen Kanal 32, der mit dem Druckmittelvorratsbehälter verbunden ist. Durch die beschriebene Anordnung wird erreicht, daß das Druckmittel aus dem ersten Druckraum 25 bei abgesperrtem zweitem Druckraum 26 in den Druckmittelvorratsbehälter verschoben werden kann. Alternativ zu dieser vorgeschlagenen Lösung kann die Simulation des Pedalgefühls auch ohne separaten Simulator 29 erfolgen, wenn beispielsweise die erste Rückstellfeder 27 als Simulatorfeder ausgestaltet ist.

Ein wichtiger technischer Aspekt besteht bei derart betätigten Bremsanlagen des Typs "brake-by-wire", und insbesondere bei elektro-hydraulischen Bremsen EHB, in der zuverlässigen Erkennung des Fahrerverzögerungswunsches. Es hat sich als besonders vorteilhaft herausgestellt, wenn hierzu Signale von den Betätigungsweg erfassenden Sensorvorrichtungen verwendet werden. Deswegen ist bevorzugt im Eintrittsbereich des Gehäuses 21 die erfindungsgemäße Kraftfahrzeugsensorvorrichtung 1 vorgesehen, deren für die Signalerzeugung erforderlicher Encoder 6 bevorzugt am Kolben 17 angeordnet ist, während ein die Sensorik aufnehmendes Gehäuse 16 der Sensorvorrichtung 1 erfindungsgemäß vorzugsweise im Gehäuse 21 des Bremsdruckgebers 18 integriert ist. So sind die einzelnen Bauteile der Sensorvorrichtung 1 besonders gut vor Korrosion oder anderen deren Funktionsfähigkeit möglicherweise beeinträchtigenden Eihflüssen geschützt.

Der Bremsvorgang bzw. die Übertragung des Fahrerwunsches vom Bremspedal zu den Radbremsen eines Fahrzeuges erfolgt bei abgesperrten Druckräumen 25, 26 insbesondere auch auf elektronischem Wege. Der Verzögerungswunsch des Fahrers eines Kraftfahrzeuges wird mittels der erfindungsgemäßen Sensorvorrichtung 1 sensiert und über elektrische Leitungen 36 an eine elektronische Kontrolleinheit ECU (Electronic Control Unit) weitergeleitet, in der die Signale der Sensorvorrichtung 1 erfaßt und ausgewertet werden. Der eingentliche Bremsvorgang, d.h. die Betätigung der Radbremsen, kann dann durch die ECU gesteuert bzw. geregelt auch hydraulisch erfolgen.

Für die zu sensierende Relativbewegung zwischen dem Encoder 6 und der Sensorik wird die Auslenkung eines nicht gezeigten Bremspedals über einen Gabelkopf 33 und eine Kolbenstange 34 auf den Kolben 17 übertragen. Die Kolbenstange 34 weist vorzugsweise einen Kugelkopf 35 auf, der im Kolben 17 beweglich gelagert ist. Der Betätigungskolben 17 umfaßt gemäß einer bevorzugten Variante der vorliegenden Erfindung auch ein Führungsteil 9 für den Encoder 6. Insbesondere durch den vorzugsweise im Führungsteil 9 und damit im Kolben 17 vorgesehenen Encoder 6 ist im Vergleich zu einer alternativen Ausführungsform mit einer parallel dazu angeordneten, separaten Sensorvorrichtung kein zusätzlicher Bauraum erforderlich.

Das Führungsteil 9 weist bevorzugt eine Dichtfläche 22 auf, die zusammen mit einem Dichtelement 10 eine Dichtung bildet. Als Dichtelement 10 kann dabei ein handelsübliches elastomeres Dichtelement 10 vorgesehen sein, etwa eine Lippenringdichtung, es ist aber auch der Einsatz anderer Dichtelemente möglich. Durch diese Maßnahme ist eine sehr kompakte Bauweise des Bremsdruckgebers 18 oder anderer Kraftfahrzeugteile möglich, in die die erfindungsgemäße Sensorvorrichtung 1 eingesetzt werden kann. Die für die Dichtung erforderliche Länge, beispielweise des Betätigungskolbens 17, kann zugleich in vorteilhafter Weise für die Messung des Relativbewegung genutzt werden. Gemäß einer bevorzugten Variante der Erfindung wirkt es sich Bauraum sparend aus, wenn das Dichtelement 10 direkt (nicht gezeigt) oder indirekt am Gehäuse 16 für die Sensorik bzw. des Sensors abgestützt ist, weil dadurch eine anderweitige Abstützung nicht mehr erforderlich ist.

Die vorliegende Erfindung ist nicht auf Bremsdruckgeber 18 beschränkt, sondern es kommt eine Vielzahl von Anwendungen in Kraftfahrzeugen in Frage. Und zwar überall dort, wo eine Relativbewegung zweier relativ zueinander bewegbarer Teile gemessen werden kann. Die Bewegung kann dabei auch eine Drehbewegung sein, vorzugsweise betrifft die Erfindung aber die Sensierung von Linearbewegungungen. Beispielsweise eignet sich die Sensorvorrichtung 1 gemäß der vorliegenden Erfindung inbesondere als Wegsensor für Bremsdruckgeber 18 einer elektro-hydraulischen Bremsanlage. Aber auch ein Einsatz bei anderen fluidischen Antrieben oder Betätigungen in Kraftfahrzeugen ist denkbar. Ferner kann die Erfindung ebenso bei Stoßdämpfern oder Lenkungen eines Kraftfahrzeuges verwendet werden.

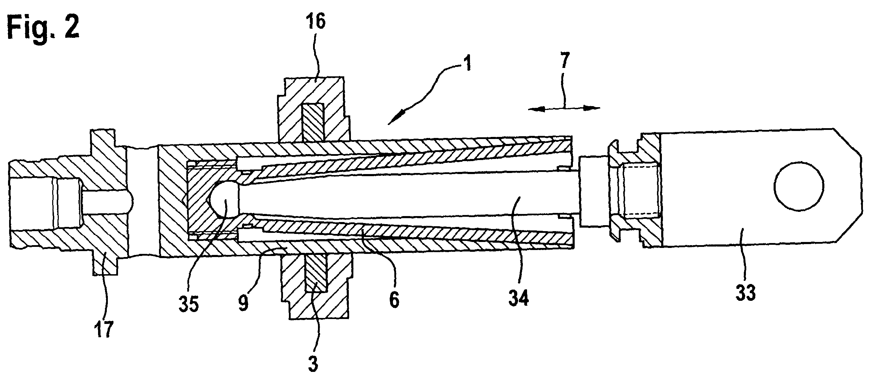

Fig. 2 zeigt die Kraftfahrzeugsensorvorrichtung 1 gemäß der vorliegenden Erfindung nochmals in vergrößerter Ansicht, wobei zur Vermeidung von unnötigen Wiederholungen auf die obigen Ausführungen vollinhaltlich bezug genommen wird. Mittels der Sensorvorrichtung 1 wird die Relativbewegung zwischen einem feststehenden Bauteil 3, 16 und einem relativ dazu beweglichen Bauteil oder Encoder 6 sensiert, wobei die Hautptbewegungsrichtung des Encoders 6 mit dem Bezugszeichen 7 bezeichnet ist.

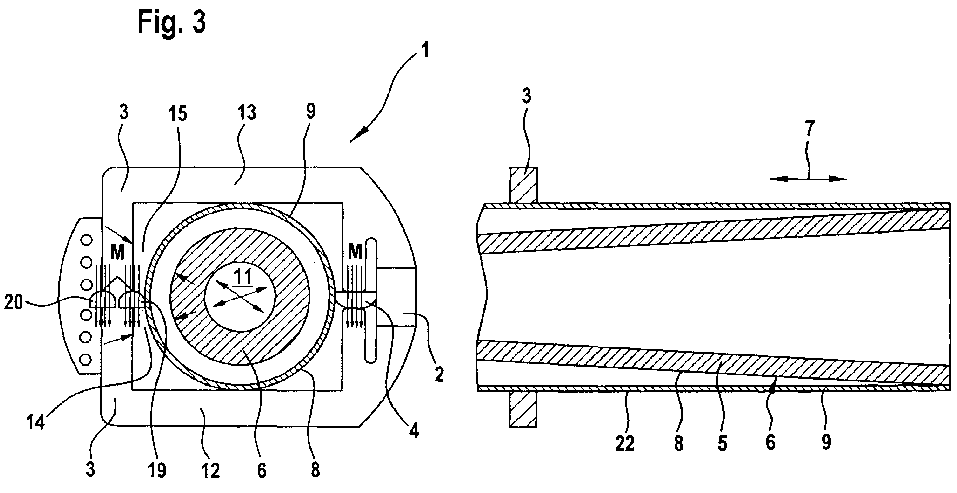

Gemäß einer besonders bevorzugten Ausführungsform der vorliegenden Erfindung ist der Encoder 6 zumindest teilweise von einem Joch 3 umgriffen, wobei das Joch 3 bevorzugt im Sensorgehäuse 16 vorgesehen ist. In Kombination mit dem erfindungsgemäß zwischen dem Encoder 6 und dem Joch 3 angeordneten Führungsteil 9 ist eine besonders kompakte, kurzbauende und genau messende Kraftfahrzeugsensorvorrichtung 1 möglich. Die für die Messung erforderliche Länge des Encoders 6 kann dabei mit Vorteil ganz oder auch nur zum Teil für dessen Führung genutzt werden. Der Aufbau und die Funktionsweise des Jochs 3 wird weiter unten in Zusammenhang mit der Beschreibung zu Fig. 3 noch näher erläutert.

In einer möglichen (nicht dargestellten) Weiterbildung der Erfindung ist das Führungsteil 9 mit dem Sensorgehäuse 16 verbunden und der Encoder 6 im Führungsteil 9 und damit innerhalb des Sensorgehäuses 16 bewegbar angeordnet. Diese Form eignet sich besonders für Wegsensoren in einem Stoßdämpfer, beispielsweise bei aktiven Stoßdämpfern, oder bei anderen Regelungen eines Kraftfahrzeugfahrwerks. Beispielsweise kann dabei das Führungsteil 9 einstückig mit dem Gehäuse 16 des Sensors ausgebildet sein, was wiederum Bauraum spart und eine besonders gute Führung relativ zum Sensorgehäuse 16 ermöglicht.

In der bevorzugten Ausführungsform der vorliegenden Erfindung ist jedoch das Führungsteil 9 lösbar oder unlösbar mit dem Encoder 6 verbunden und zusammen mit diesem bewegbar. Hierbei ist es von Vorteil, wenn das Führungsteil 9 und damit auch der Encoder 6 in Gehäuse 16 des Sensors gelagert ist. Durch diese vorteilhafte Maßnahme kann wiederum Baulänge gespart werden, da eine anderweitige Lagerung entfallen kann.

Die Funktionsweise und der innere Aufbau der erfindungsgemäßen Kraftfahrzeugsensorvorrichtung 1 werden aus Fig. 3 näher ersichtlich. Dabei stellt die rechte Seite von Fig. 3 eine vergrößerte Darstellung von Teilen der Fig. 2 dar. Auf der linken Seite von Fig. 3 ist die erfindungsgemäße Sensorvorrichtung 1 im Querschnitt gezeigt. Auf die bereits oben in Zusammenhang mit Fig. 1 und 2 gemachten Ausführungen wird inhaltlich bezug genommen.

Die Kraftfahrzeugsensorvorrichtung 1 weist einen Magneten 2, ein bevorzugt mehrteilig ausgebildetes, magnetisch leitfähiges Joch 3, das magnetisch mit dem Magneten 2 verbunden ist, und zumindest ein magnetfeldabhängiges Sensorelement 4, 19, 20 auf. Über den magnetisch leitfähigen Encoder 6 wird der magnetische Fluß M durch das Sensorelement 4, 19, 20 in Abhängigkeit von der Position des Encoders 6 relativ zum Joch 3 verändert und so eine Relativbewegung zwischen dem Joch 3 und dem Encoder 6 gemessen. Der magnetische Fluß M durch das Sensorelement 4, 19, 20 ist dabei relativ groß, wenn der Encoder 6 einen großen Abstand zum Joch 3 aufweist. Ist dieser Abstand geringer, so geht der magnetische Fluß M eher auch über den magnetisch leitfähigen Encoder 6, so daß der Fluß M an den Stellen zwischen Teilen 12, 13 des Jochs 3, wo ein Sensorelement 4, 19, 20 angeordnet ist, abgeschwächt ist.

Gemäß dem Kern der Erfindung ist zwischen dem Encoder 6 und dem Joch 3 das magnetisch nicht leitfähige Führungsteil 9 für den Encoder 6 vorgesehen. Hierdurch wird erfindungsgemäß eine exakte Führung an der Stelle erreicht, wo der magnetisch leitfähige Encoder 6 den magnetischen Fluß M durch das Joch 3 und damit durch das Sensorelement 4, 19, 20 beeinflußt. Dies führt zu einer Erhöhung der Meßgenauigkeit der Sensorvorrichtung 1 und damit zu einer besseren Steuerung bzw. Regelung der von diesen Meßwerten abhängigen Größen.

Neben der Führung des magnetisch leitfähigen Encoders 6 ist es erfindungsgemäß ein wesentlicher Vorteil, daß das Führungsteil 9 magnetisch nicht leitfähig ist. Somit wird der magnetische Fluß M durch das Joch 3 bzw. das Sensorelement 4, 19, 20 vom Führungsteil 9 nicht beeinflußt, sondern lediglich vom Encoder 6. Dies erlaubt eine vom Führungsteil 9 unabhängige Ausgestaltungen des magnetisch leitfähigen Encoders 9, insbesondere spezielle, den magnetischen Fluß M durch das Sensorelement 4, 19, 20 in besonderer Weise beeinflussende Konturen. Das Führungsteil 9 kann dabei aus einem beliebigen magnetisch nicht leitfähigen Material hergestellt sein, beispielsweise aus Kunststoff oder Aluminium. Das Joch 3 und der Encoder 6 sind aus einem magnetisch leitfähigen Material gefertigt, beispielsweise aus Eisen.

Gemäß einer bevorzugten Variante der vorliegenden Erfindung verläuft die Hauptbewegungsrichtung 7 des Encoders 6 in etwa senkrecht zu einer vom Joch 3 aufgespannten Fläche bzw. dem magnetischen Fluß M. Hierdurch haben unerwünschte Bewegungen in einer anderen als der Hauptbewegungsrichtung 7 einen weniger starken Einfluß auf den magnetischen Fluß M durch das Sensorelement 4, 19, 20.

Wenn zusätzlich noch das Gehäuse 16 des Sensors 2, 3, 4, 12, 13, 19, 20 radial zur Hauptbewegungsrichtung 7 des Encoders 6 bewegbar ist, so können engere Luftspalte 14, 15 zwischen dem magnetisch leitfähigen Encoder 6 und dem Joch 3 realisiert werden. Der radiale Freiheitsgrad des Sensorgehäuses 16 kann außerdem bei unerwünschten radialen Auslenkungen des Encoders 6 in Art einer schwimmenden Lagerung genutzt werden. Dies ermöglicht eine genaue Messung der Relativbewegung auch bei größeren radialen Auslenkungen des Encoders 6.

Mit Vorteil kann auch das Joch 3 derart ausgebildet sein, daß bei einer Auslenkung des Encoders 6 radial zu seiner Hauptbewegungsrichtung 7 der magnetische Fluß M durch das Sensorelement 4, 19, 20 nahezu unbeeinflußt ist. Somit kann ein Spiel des Encoders 6 im Führungsteil 9 zugelassen werden, ohne daß es zu einer zu großen Verfälschung des Meßsignals kommt.

Vorzugsweise sind dabei ein erster Abstand bzw. Luftspalt 14 vom Encoder 6 zu einem ersten Teil 12 des Jochs 3 und ein zweiter Abstand bzw. Luftspalt 15 von dem Encoder 6 zu einem zweiten Teil 13 des Jochs 3 jeweils groß gegenüber einer möglichen radialen Auslenkung bzw. Querauslenkung des Encoders 6. Dadurch kann zusätzlich zu einer Querauslenkung des Encoders 6 in Richtung des magnetischen Flusses M, bei der eine Verringerung eines Luftspaltes auf der einen Seite mit einer Vergrößerung des Luftspaltes auf der entgegengesetzten Seite des Encoders 6 in Art einer Reihenschaltung kompensiert wird, auch eine Querauslenkung senkrecht zum magnetischen Fluß M zugelassen werden.

Gemäß einer besonders bevorzugten Ausführungsform der vorliegenden Erfindung weist der Encoder 6 eine informationstragende Kontur 5 bzw. Oberfläche 8 auf. Insbesondere ist dabei die Kontur 5 und/oder Oberfläche 8 in Hauptbewegungsrichtung 7 des Encoders 6 derart ausgebildet, daß ein Ausgangssignal des Sensorelementes 4, 19, 20 in etwa proportional zur Relativbewegung in Hauptbewegungsrichtung 7 ist. Der Encoder 6 soll dabei vorzugsweise so gestaltet sein, daß eine Sensorkennlinie, die beispielsweise eine elektrische Spannung in Anhängigkeit vom Weg beschreibt, nahezu linear verläuft. Dies führt in vorteilhafter Weise zu einer Kompensation von nichtlinearen Effekten der Sensorvorrichtung 1 bei sonst kontinuierlicher Veränderung des Luftspaltes 14, 15 zwischen Encoder 6 und Joch 3. Dies ist eine besonders kostengünstige Lösung der Linearisierung der Sensorkennlinie, die sonst nur mit einer nachgeschalteten elektronischen Kennlinienkorrektur beispielsweise innerhalb der ECU erfolgen könnte. Mit Vorteil wird bereits eine annähernd lineare Sensorkennlinie erreicht, wenn die Kontur 5 des Encoders 6 nahezu konisch ausgebildet ist. Erfindungsgemäß kann die Kontur 5 des Encoders 6 aber auch anders gestaltet sein.

Um eine Redundanz, d.h. ein weiteres Ausgangssignal eines Sensorelementes 19 zu erhalten, mit dessen Hilfe das Ausgangssignal des ersten Sensorelementes 4 überprüft werden kann bzw. um das Signal des Sensorelementes 4 bei dessen Ausfall zu ersetzen, ist vorzugsweise in der Kraftfahrzeugsensorvorrichtung 1 ein zusätzliches Sensorelement 19 vorgesehen. Dies ist insbesondere bei sicherheitskritischen Systemen, wie beispielsweise Bremsanlagen von Kraftfahrzeugen, von Vorteil. Bei Ausfall eines Sensorelementes 4 bleiben die Kraftfahrzeugsensorvorrichtung 1 und die geregelte Bremse somit funktionsfähig.

Insbesondere ist mit Vorteil in der erfindungsgemäßen Sensorvorrichtung 1 neben den Elementen 4, 19 ein weiteres Sensorelement 20 vorgesehen, das bei einer Bewegung des Encoders 6 ein Einschaltsignal für die Kraftfahrzeugsensorvorrichtung 6 oder andere Bauteile liefert. Dieses weitere Sensorelement 20 kann mit einer geringen Stromaufnahme versehen sein und dient als Weckschalter bzw. Initialsignalgeber, beispielsweise um ein von einer Spannungsversorgung abgeschaltetes System "aufzuwecken", sobald sich der magnetische Fluß M durch das weitere Sensorelement 20 ändert. Beispielsweise kann auf diese Weise auch eine elektronische Kontrolleinheit ECU (Electronic Control Unit) einer elektronisch geregelten Kraftfahrzeugbremse eingeschaltet werden.

## Patentansprüche

1. Kraftfahrzeugsensorvorrichtung (1) zur Erfassung der Relativbewegung von relativ zueinander bewegbaren Teilen (3, 6) mit wenigstens einem Magneten (2), einem magnetisch leitfähigen Joch (3), welches magnetisch mit dem Magneten (2) verbunden ist, wenigstens einem magnetfeldabhängigen Sensorelement (4, 19, 20) und einem magnetisch leitfähigen Encoder (6), welcher einen magnetischen Fluß (M) durch das Sensorelement (4, 19, 20) in Abhängigkeit von der Position des Encoders (6) relativ zum Joch (3) verändert, **dadurch gekennzeichnet, daß** zwischen dem Encoder (6) und dem Joch (3) ein magnetisch nicht leitfähiges Führungsteil (9) für den Encoder (6) vorgesehen ist.

2. Kraftfahrzeugsensorvorrichtung (1) nach Anspruch 1, **dadurch gekennzeichnet, daß** der Encoder (6) zumindest teilweise vom Joch (3) umgriffen ist.

3. Kraftfahrzeugsensorvorrichtung (1) nach Anspruch 1 oder 2, **dadurch gekennzeichnet, daß** das Führungsteil (9) mit einem Gehäuse (16) des Sensors (2, 3, 4, 12, 13, 19, 20) verbunden und der Encoder (6) im Führungsteil (9) bewegbar ist.

4. Kraftfahrzeugsensorvorrichtung (1) nach Anspruch 3, **dadurch gekennzeichnet, daß** das Führungsteil (9) einstückig mit dem Gehäuse (16) des Sensors (2, 3, 4, 12, 13, 19, 20) ausgebildet ist.

5. Kraftfahrzeugsensorvorrichtung (1) nach Anspruch 1 oder 2, **dadurch gekennzeichnet, daß** das Führungsteil (9) mit dem Encoder (6) verbunden und mit diesem bewegbar ist.

6. Kraftfahrzeugsensorvorrichtung (1) nach Anspruch 5, **dadurch gekennzeichnet, daß** das Führungsteil (9) in dem Gehäuse (16) des Sensors (2, 3, 4, 12, 13, 19, 20) gelagert ist.

7. Kraftfahrzeugsensorvorrichtung (1) nach einem der vorhergehenden Ansprüche, **dadurch gekennzeichnet, daß** das Führungsteil (9) eine Dichtfläche (22) aufweist, die mit einem vorzugsweise elastomeren Dichtelement (10) eine Dichtung (10, 22) bildet.

8. Kraftfahrzeugsensorvorrichtung (1) nach Anspruch 7, **dadurch gekennzeichnet, daß** das Dichtelement (10) direkt oder indirekt am Gehäuse (16) des Sensors (2, 3, 4, 12, 13, 19, 20) abgestützt ist.

9. Kraftfahrzeugsensorvorrichtung (1) nach Anspruch 1 oder 2, **dadurch gekennzeichnet, daß** die Hauptbewegungsrichtung (7) des Encoders (6) in etwa senkrecht zu einer vom Joch (3) aufgespannten Fläche und/oder dem magnetischen Fluß (M) durch das Sensorelement (4, 19, 20) verläuft.

10. Kraftfahrzeugsensorvorrichtung (1) Anspruch 9, **dadurch gekennzeichnet, daß** das Gehäuse (16) des Sensors (2, 3, 4, 12, 13, 19, 20) radial zur Hauptbewegungsrichtung (7) des Encoders (6) bewegbar ist.

11. Kraftfahrzeugsensorvorrichtung (1) nach Anspruch 9 oder 10, **dadurch gekennzeichnet, daß** das Joch (3) derart ausgebildet ist, daß bei einer Auslenkung (11) des Encoders (6) radial zu seiner Hauptbewegungsrichtung (7) der magnetische Fluß (M) durch das Sensorelement (4, 19, 20) nahezu unbeeinflußt ist.

12. Kraftfahrzeugsensorvorrichtung (1) nach Anspruch 11, **dadurch gekennzeichnet, daß** ein erster Abstand (14) vom Encoder (6) zu einem ersten Teil (12) des Jochs (3) und ein zweiter Abstand (15) vom Encoder (6) zu einem zweiten Teil (13) des Jochs (3) jeweils groß gegenüber einer radialen Auslenkung (11) des Encoders (6) sind.

13. Kraftfahrzeugsensorvorrichtung (1) nach einem der vorhergehenden Ansprüche, **dadurch gekennzeichnet, daß** das der Encoder (6) eine informationstragende Kontur (5) und/oder Oberfläche (8) aufweist.

14. Kraftfahrzeugsensorvorrichtung (1) nach Anspruch 13, **dadurch gekennzeichnet, daß** die Kontur (5) bzw. Oberfläche (8) in Hauptbewegungsrichtung (7) des Encoders (6) derart ausgebildet ist, daß ein Ausgangssignal des Sensorelementes (4, 19) in etwa proportional zur Relativbewegung in Hauptbewegungsrichtung (7) ist.

15. Kraftfahrzeugsensorvorrichtung (1) nach Anspruch 14, **dadurch gekennzeichnet, daß** die Kontur (5) des Encoders (6) nahezu konisch ausgebildet ist.

16. Kraftfahrzeugsensorvorrichtung (1) nach einem der vorhergehenden Ansprüche, **dadurch gekennzeichnet, daß** zusätzlich zum Sensorelement (4) ein weiteres Sensorelement (19) vorgesehen ist, welches eine Redundanz des Ausgangssignales ermöglicht.

17. Kraftfahrzeugsensorvorrichtung (1) nach einem der vorhergehenden Ansprüche, **dadurch gekennzeichnet, daß** ein Sensorelement (20) vorgesehen ist, das bei einer Bewegung des Encoders (6) ein Einschaltsignal (Weckfunktion) liefert.

18. Kraftfahrzeugsensorvorrichtung (1) nach Anspruch 5, **dadurch gekennzeichnet, daß** das Führungsteil (9) Teil eines Betätigungskolbens (17) eines hydraulischen Bremsdruckgebers (18) ist.

19. Kraftfahrzeugsensorvorrichtungs (1) nach einem der vorhergehenden Ansprüche, **dadurch gekennzeichnet, daß** das Gehäuse (16) des Sensors (2, 3, 4, 12, 13, 19, 20) im Gehäuse (21) des Bremsdruckgebers (18) integriert ist.

20. Bremsdruckgeber (18) mit einer Kraftfahrzeugsensorvorrichtung (1) nach einem der Ansprüche 1 bis 19.
